## Europäisches Patentamt
## European Patent Office
## Office européen des brevets

(11) Publication number: **0 262 957**
**A2**

(12) # EUROPEAN PATENT APPLICATION

(21) Application number: **87308675.5**

(51) Int. Cl.⁴: **H 04 M 1/31**

(22) Date of filing: **30.09.87**

(30) Priority: **30.09.86 JP 232410/86**

(43) Date of publication of application:
**06.04.88 Bulletin 88/14**

(84) Designated Contracting States: **DE SE**

(71) Applicant: **KABUSHIKI KAISHA TOSHIBA
72, Horikawa-cho Saiwai-ku
Kawasaki-shi Kanagawa-ken 210 (JP)**

(72) Inventor: **Umemoto, Yuji
1-6-2, Asahigaoka
Hino-shi Tokyo (JP)**

(74) Representative: **Freed, Arthur Woolf et al
MARKS & CLERK 57-60 Lincoln's Inn Fields
London WC2A 3LS (GB)**

(54) **Dial impulse generating circuit in a radio telephone.**

(57) A dial impulse generator in a radio telephone system in which a line relay (29,26) is not used to generate a dial impulse. Under a condition that contacts (26) of the line relay (29,26) are closed, a transistor (30) is driven to open and close a DC loop through a photocoupler (31) under control of a control circuit (12), thus sending the dial impulse to wire lines (3).

*FIG. 1*

EP 0 262 957 A2

**Description**

DIAL IMPULSE GENERATING CIRCUIT IN A RADIO TELEPHONE

The present invention relates to dial impulse generating circuits in wireless or radio telephone systems and, more particularly, to a dial impulse generator in a radio telephone system in which a line relay is not used to generate a dial impulse.

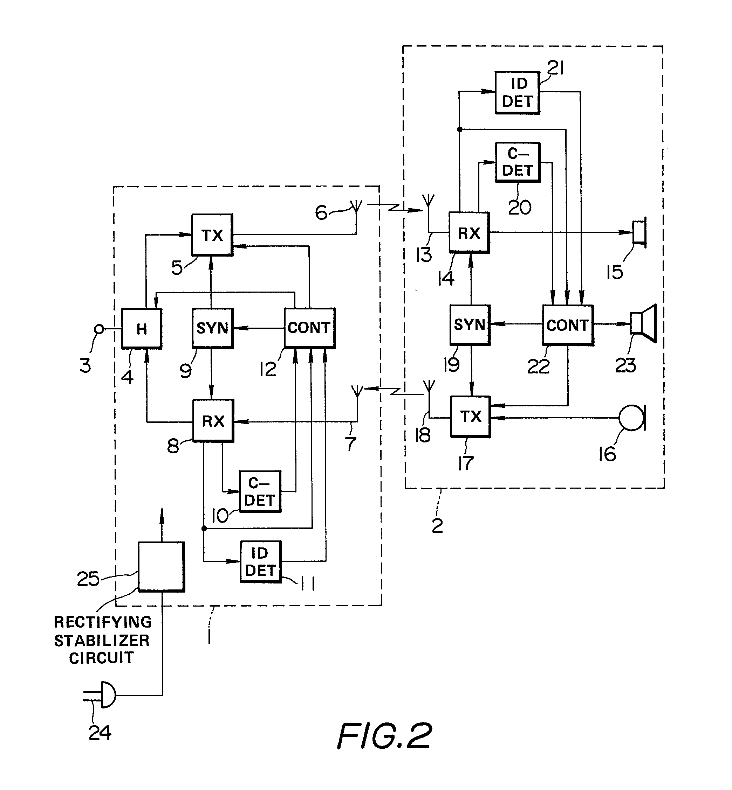

A radio telephone system has generally such an arrangement as shown in Fig. 2, in which a master unit 1 is connected via radio lines to a radiophone set 2 and also to wire telephone lines 3. The operation of the radio telephone system having such an arrangement will briefly be explained in the following.

A signal sent from the wire telephone lines 3 is applied through a line circuit 4 to a transmitter 5 to be modulated therein. A radio wave modulated by the transmitter 5 is transmitted from a transmitting antenna 6 to the radiophone 2.

A radio wave transmitted from the radiophone 2, on the other hand, is received at a receiving antenna 7 of the master unit and then sent to a receiver 8 to be demodulated therein. The demodulated signal is sent through the line circuit 4 to the wire telephone lines 3. A synthesizer 9 is provided to apply a frequency corresponding to a radio channel. One of outputs of the receiver 8 is applied to a receiving electric field detector 10 to determine the intensity of a receiving electric field. This detector 10 is also referred to generally as a carrier or noise squelch. Another of the outputs of the receiver 8 is sent as a data signal contained in the received demodulated wave to an identification (ID) signal detector 11 to be collated with an identification signal determined by a combination of the master unit 1 and the radiophone 2. The identification signal is generally called an ID code. Outputs of these detectors 10 and 11 as well as the demodulated output of the data signal are applied to a control circuit 12 for connection control. The control circuit 12 functions to control the synthesizer 9 for radio channel control, and also controllably sent a transmitter data signal to the transmitter 5 as a modulation input.

In the meantime, the radiophone 2 has a receiving antenna 13 and a receiver 14 similar to those in the master unit 1, a demodulated output of the receiver 14 being sent to an earpiece 15. A voice received by a mouthpiece 16 is provided to the transmitter 17 to be modulated. A radio wave modulated by the transmitter 17 is transmitted from a sending antenna 18 to the master unit 1. A synthesizer 19, a receiving electric field detector 20 and an identification signal detector 21 have substantially the same arrangement as those in the master unit 1. A control circuit 22 is provided to control the radiophone 2. A loudspeaker 23 is used as a sounder which generates a ranging tone when an incoming call is received. A power supply system of the master unit 1 includes an AC plug 24 and a rectifying stabilizer circuit 25, so that when the plug 24 is connected to a commercial AC 100V power source, the rectifying stabilizer circuit 25 distributes its power output to the respective circuits already explained above.

Referring to Fig. 3, there is shown a detailed arrangement of the line circuit 4 of the master unit 1, which includes a line relay 26, a rectifying stack 27, a call or speech circuit 28 and a relay driver 29. The line relay 26 is used to controllably open or close a DC loop of the wire lines 3 depending on the contact state of the relay connected in series with the telephone lines 3. The relay 26 corresponds to a hook switch of an ordinary telephone set. In operation, when the radiophone is put, for example, in its speech mode, the controller 12 generates a line relay control signal and sends it to the relay driver 29 which in turn commands the line relay 26 to close the contact thereof on the basis of the line relay control signal, thus establishing a closed DC loop of the wire telephone lines 3. Under such a condition, a line voltage across the wire telephone lines 3 is rectified by the rectifying stack 27 and supplied as power to the speech circuit 28 which in turn performs a two-wire to four-wire switching between the wire telephone lines 3 and the transmitter 5 or receiver 8 to process an AF signal in the speech mode.

In the radio telephone system of the type referred to a dial impulse is generated by the line circuit 4. More specifically, when the telephone user wishes to call a telephone terminal connected to the wire lines 3, the control circuit 12 applies a dial impulse signal indicative of the telephone terminal to the relay driver 29 and the driver 29 in turn drives the contacts of the line relay 26 on the basis of the dial impulse signal for control of the opening and closing of the DC loop, whereby the dial impulse is sent out onto the wire telephone lines 3. Such an arrangement of the prior art dial impulse generator that the line relay 26 is used to generate the dial impulse, is done in accordance with the terminal facilities regulation that "any external DC voltage should not be applied to wire lines", but the use of the line relay 26 requires the dial impulse generator to satisfy the following design conditions.

First, it is required to design the make ratio of the dial impulse signal within 33 ± 3%, and that the line relay 26 be excellent in operational response to the dial impulse signal, i.e., the relay have a very short opera tional time and holding time and less make ratio variations. Further, the line relay 26 must have a long operational life enoufh to withstand the frequent dial operation (usually, more than 10,000,000 times).

In order to meet all of such conditions, the line relay 26 must be made large and have a high performance. In addition, it is necessary for the control circuit of the line relay 26 to have a function of correcting the timing of sending the dial impulse control signal by an amount corresponding to a difference between the operational and holding times of the line relay 26, which involves the complicated circuit design. Accordingly, the prior art dial impulse generator has had such problems that the size is large, the fabrication cost is high and the voltage loss and noise are both much due to the above design conditions.

In this way, the prior art dial impulse generator in the radio telephone system has had such problems as the large size, high fabrication cost, and much voltage loss and noise, because the generator employs the line relay to provide a DC isolation from wire lines and also to generate the dial impulse.

In view of the above circumstances, it is an object of the present invention to provide a dial impulse generator in a radio telephone system, which can maintain DC isolation from wire lines, and also can be made with the small size and fabrication cost and also with the reduced voltage loss and noise.

In accordance with the present invention, a dial impulse generator in a radio telephone system comprises first switching means for establishing a DC loop of wire lines, second switching means for opening and closing the DC loop, and control means for driving the second switching means to send a dial impulse to the wire lines under such a condition that the contacts of the first switching means are put in their closed state. In this case, the first switching means comprises a line relay while the second switching means comprises a translator.

With the dial impulse generator of the radio telephone system, the above object is attained by driving the second switching means through such a control element as a photocoupler under control of the control means to open and close the DC loop and to send the dial impulse to the wire lines.

In this manner, in accordance with the present invention, since the second switching means is driven through such a control element as a photocoupler to open and close the DC loop of the wire lines and to generate the dial impulse, the dial impulse generator can advantageously made to be small in the size and low in the fabrication cost with reduced voltage loss and noise, while maintaining DC isolation with respect to the wire lines.

Fig. 1 is a block diagram showing an embodiment of a dial impulse generating circuit in a radio telephone system in accordance with the present invention;

Fig. 2 is a block diagram showing an arrangement of an ordinary radio telephone system; and

Fig. 3 is a block diagram showing a detailed arrangement of a line circuit in the radio telephone system of Fig. 2, as a prior art dial impulse generating circuit in the radio telephone system as an example.

An embodiment of the present invention will be detailed with reference to accompanying drawings.

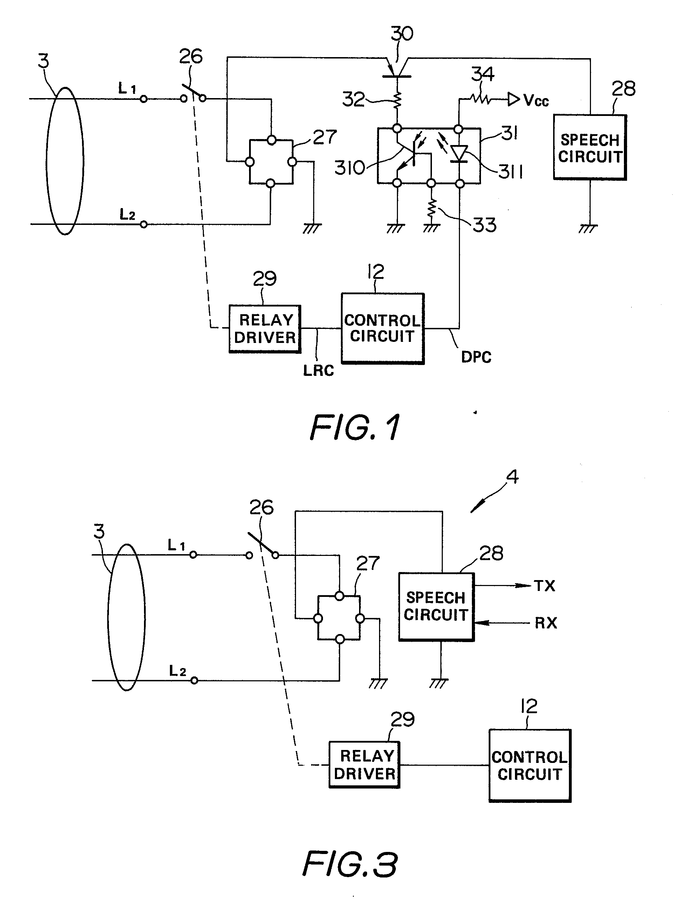

There is shown an embodiment of a dial impulse generator in a radio telephone system in accordance with the present invention in Fig. 1, wherein parts having the same functions as those in a line circuit of Fig. 3, i.e., in a prior art dial impulse generator are denoted by the same reference numerals or symbols. The illustrated dial impulse generator of the present invention includes a switching transistor 30 and a photocoupler 31 for control of the switching operation of the transistor 30, the elements 30 and 31 being newly added to the prior art circuit of Fig. 3.

The detailed wiring arrangement of the dial impulse generator of the invention will be explained in the following.

The switching transistor 30 is connected at its emitter to a plus output terminal of the rectifying stack 27, at its collector through the speech circuit 28 to a minus output terminal of the stack 27, and at its base through a base current limiting resistance 32 to the collector of a phototransistor 310 which forms a light receiving part of the photocoupler 31. The phototransistor 310 is connected at its emitter directly to the minus output terminal of the rectifying stack 27 and at its base through a base current limiting resistance 33 to the minus output terminal of the stack 27. On the other hand, a light emitting diode 311, which forms a light emitting part of the photocoupler 31, is connected at its cathode via a current limiting resistance 34 to a power source voltage Vcc and at its anode to the control circuit 12.

In Fig. 1, the line relay 26 has not a function of generating a dial impulse, that is, the relay 26 is driven by the relay driver 29 on the basis of a control signal (signal LRC) that is an output of the control circuit 12 and the relay is used only to control the opening and closing operation of the DC loop of the wire telephone lines 3. The switching transistor 30 is driven through the photocoupler 31 and the base current limiting resistance 32 on the basis of another control signal (signal DPC) that is the other output of the control circuit 12, so that when the signal DPC is at low level, the transistor 30 is turned ON. If the transistor 30 is in its ON state and at the same time the contacts of the line relay 26 are closed, then the DC loop of the wire telephone lines 3 is closed. That is, the DC loop is closed when the contacts of the line relay 26 are closed and the switching transistor 30 is controllably put in its ON state, in which case power is supplied via the wire telephone lines 3, rectifying stack 27 and transistor 30 to the speech circuit 28.

With the DC loop thus closed, when the dial impulse is to be transferred to the party telephone set terminal connected to the wire telephone lines 3, the control circuit 12 sends to the light emitting diode 311 of the photocoupler 31 the signal DPC that is the dial impulse signal indication of the dial number of the party telephone set terminal to drive the diode 311.

The light emitting diode 311, which is powered by the power source voltage Vcc, is turned ON or lit when the dial impulse signal is at low level, while is turned OFF or put out when the dial impulse signal is at high level.

On the side of the light receiving part of the photocoupler 31, on the other hand, the phototransistor 310 is turned ON when the light emitting diode 311 is lit, at which time a drawing current of the phototransistor 310 flowing through the base current limiting resistance 32 causes the switching transistor 30 to also be turned ON. When the light emitting diode 311 is turned OFF, i.e., returned to the put-out state, the phototransistor 310 is also be turned OFF and at the same time the switching transistor 30 is also turned OFF.

In this manner, in accordance with the present invention, the signal DPC as an output of the control circuit 12 is used to control the switching operation of the transistor 30 through the photocoupler 31, that is, to open and close the DC loop to thereby generate the dial impulse.

In the present invention, the photocoupler 31 is employed to drive the switching transistor 30 in control of sending the dial impulse, whereby DC isolation can be provided between the control circuit 12 that is operated by the AC power source and the wire telephone lines 3 and thus such an arrangement as satisfies the above-cited terminal facilities regulation can be obtained.

As an element for control of the switching operation of the transistor 30, any control element other than the photocoupler 31 may be used so long as it can provide a DC isolation between the control circuit 12 and wire telephone lines 3.

Further, since it is unnecessary for the line relay 26 to have a function of generating the dial impulse signal and have a high operational speed and a long service life, a small and inexpensive line relay can be employed.

In addition, the switching operation of the transistor 30 can be controlled by the photocoupler 31 in re sponse to the dial impulse signal, so that variations in the make ratio can be minimized and the design of the control circuit 12 can be facilitated.

Furthermore, the switching transistor 30 can advantageously be very low in voltage loss and operate quietly without its operational noise.

## Claims

1. A dial impulse generator in a radio telephone system having a master unit (1) connected to wire lines (3) and a radiophone (2) connected through radio lines to said master unit (1), characterized in that said master unit (1) comprising:

first switching means (26) for establishing a DC loop of said wire lines:

second switching means (30) for opening and closing said DC loop; and

control means (12) for driving said second switching means (30) to send a dial impulse to said wire lines (3) under a condition that said first switching means (26) is closed.

2. A dial impulse generator as set forth in claim 1, wherein said first switching means (26) comprises contacts (26) of a line relay (29) that is turned ON in a speech mode.

3. A dial impulse generator as set forth in claim 1, wherein said second switching means (30) comprises a transistor.

4. A dial impulse generator as set forth in claim 1, wherein said master unit (1) further comprises isolation means (31) through which said control means (12) drives said second switching means (30).

5. A dial impulse generator as set forth in claim 4, wherein said isolation means (31) comprises a photocoupler.

FIG.1

FIG.3

0262957

RECTIFYING
STABILIZER
CIRCUIT

*FIG.2*